# EUROPÄISCHE PATENTANMELDUNG

(11) **EP 0 866 253 A2**
(43) Veröffentlichungstag der Anmeldung: **23.09.1998**
(21) Anmeldenummer: 98104339.1
(22) Anmeldetag: 11.03.1998
(51) Int. Cl.: F16K 15/02

(54) **Rückschlagventil**

(30) Priorität: 17.03.1997 DE 19710983
(71) Anmelder: Holter Regelarmaturen GmbH & Co. KG, D-33758 Schloss Holte-Stukenbrock (DE)
(72) Erfinder: Wangemann, Matthias, 33758 Schloss Holte-Stukenbrock (DE)
(74) Vertreter: Hanewinkel, Lorenz, Dipl.-Phys.

(57) **Zusammenfassung**

Das Rückschlagventil (1) weist ein Ventilgehäuse (2) mit einem in einer Hauptdurchflußrichtung (R) angeordneten Zuflußstutzen (3), einem diesem gegenüberliegenden Abflußstutzen (4) und einer im wesentlichen parallel zur Hauptdurchflußrichtung (R) angeordneten Mittelwand (6) auf, welche den Gehäuseinnenraum in einen zuflußseitigen und einen abflußseitigen Raum (7, 8) unterteilt und in der sich quer zur Hauptdurchflußrichtung (R) eine Durchflußöffnung (9) mit einem abflußseitigen Dichtsitz (11) befindet. Im Ventilgehäuse (2) ist ein Hauptventilteller (10) beweglich angeordnet, welcher im geschlossenen Zustand am Dichtsitz (11) der Durchflußöffnung (9) anliegt. Zuflußseitig, koaxial zur Durchflußöffnung (9) befindet sich im Ventilgehäuse (2) eine Bypassöffnung (5a). In der Bypassöffnung (5a) ist ein Mindestmengenventil (30) mit mindestens einem Mindestmengenventilkörper (31) angeordnet, welcher mit dem Hauptventilteller (10) gekoppelt ist, und welcher eine Mindestmengenventilöffnung (32) in Abhängigkeit von der Schließstellung des Hauptventiltellers (10) freigibt. Der Hauptventilteller (10) ist hierzu mit einem Pilotventil (40) gekoppelt, durch dessen Schließstellung ein Steuerdruck in einem Innenraum (52) eines zwischen dem Hauptventilteller (10) und dem Mindestmengenventil (30) angeordneten Steuerzylinders (50) bestimmt wird, in welchem ein mit dem Mindestmengenventilkörper (31) verbundener Steuerkolben (51) verschiebbar gelagert ist, dessen Position im Steuerzylinder (50) durch den Steuerdruck im Steuerzylinderinnenraum (52) bestimmt wird.

## Beschreibung

Die Erfindung betrifft ein Rückschlagventil mit einem Ventilgehäuse mit einem in einer Hauptdurchflußrichtung angeordneten Zuflußstutzen, einem diesem gegenüberliegenden Abflußstutzen und einer im wesentlichen parallel zur Hauptdurchflußrichtung angeordneten Mittelwand, welche den Gehäuseinnenraum in einen zuflußseitigen und einen abflußseitigen Raum unterteilt und in der sich quer zur Hauptdurchflußrichtung eine Durchflußöffnung mit einem abflußseitigen Dichtsitz befindet,
mit einem im Ventilgehäuse beweglich angeordneten, im geschlossenen Zustand am Dichtsitz der Durchflußöffnung anliegenden Hauptventilteller,
mit einer zuflußseitig, koaxial zur Durchflußöffnung im Ventilgehäuse angeordneten Bypassöffnung
und mit einem in der Bypassöffnung angeordneten Mindestmengenventil mit mindestens einem Mindestmengenventilkörper, welcher mit dem Hauptventilteller gekoppelt ist, und welcher eine Mindestmengenventilöffnung in Abhängigkeit von der Schließstellung des Hauptventiltellers freigibt.

Derartige Rückschlagventile sind zum Beispiel aus der DE 44 22 749 C2 bekannt. Sie dienen üblicherweise dem Schutz von Pumpen, z.B. in Speisewasseranlagen im Kraftwerksbereich oder dgl.. Bei solchen Ablagen wird aus einem Speisewasserbehälter über eine Pumpe Wasser zu einem Kessel gepumpt. Zur Regelung der Wassermenge befindet sich in der Regel vor dem Kessel ein Speisewasserregelventil. Da die Pumpe jedoch zur Vermeidung von Überhitzungen immer eine bestimmte Durchflußmindestmenge des zu pumpenden Mediums benötigt, muß entsprechend der Regelung des Speisewasserregelventils ein Bypass geöffnet werden, durch welchen die überschüssige Menge zurück in den Speisewasserbehälter geleitet werden kann. Diese Regelung ist auf sehr einfache Weise mit einem Rückschlagventil der eingangs genannten Art durch die direkte Kopplung des im Hauptstrom zwischen Pumpe und Speisewasserregelventil befindlichen Hauptventiltellers mit dem koaxial dazu angeordneten Mindestmengenventil möglich. Die in der DE 44 22 749 C2 genannten Rückschlagventile sind dabei äußerst kostengünstig und wartungsfreundlich aufgebaut.

Üblicherweise ist auch bei einem voll geöffnetem Speisewasserregelventil der Druckabfall über dem Hauptventilteller im Hauptstrom relativ gering. Damit durch diesen geringen Druckabfall das Mindestmengenventil entgegen dem sehr hohen Druckabfall zwischen der Speisewasserleitung, bzw. dem Rückschlagventilinnenraum, und der nahezu drucklosen Bypassleitung hinter dem Mindestmengenventil, geschlossen und der Hauptventilteller geöffnet werden kann, wird durch Entlastungsbohrungen, z.B. von der relativ drucklosen Bypassleitung aus der Länge nach durch die Ventilspindel in einen abgedichteten Innenraum einer abflußseitig vom Hauptventilteller liegenden Lagerbuchse, ein entsprechender Druck- und damit Kraftausgleich hergestellt. Dementsprechend muß zum sicheren Schließen des Hauptventiltellers bei einem zu geringen Druckabfall, bzw. zu einem sicheren Öffnen des Mindestmengenventils, der Hauptventilteller abflußseitig mit einer geeignet starken Feder belastet werden. Die Funktion des gesamten Ventils hängt somit von den gewählten Dimensionen der Entlastungsbohrungen sowie von der gewählten Feder ab. Die Berechnung der Dimensionen geeigneter Entlastungsbohrungen ist jedoch äußerst schwierig. Erschwerend kommt hinzu, daß durch die Entlastungsbohrungen bei stark bewegten Flüssigkeiten nicht immer ein gleichmäßig guter und schneller Druckausgleich gewährleistet ist. Unter bestimmten ungünstigen Bedingungen kann dies zu unkontrollierbaren Schwingungen des Hauptventiltellers und des Mindestmengenventils und im Extremfall zu einer Zerstörung der Pumpe oder anderer Komponenten im Speisewasserzuleitungssystem führen.

Es ist daher Aufgabe der Erfindung ein Rückschlagventil der eingangs genannten Art zu schaffen, welches bei einfachem kostengünstigen und wartungsfreundlichem Aufbau auch bei extremen Druckschwankungen sicher funktioniert und bei welchem unkontrollierbare Schwingungszustände sicher vermieden werden.

Diese Aufgabe wird dadurch gelöst, daß der Hauptventilteller mit einem Pilotventil gekoppelt ist, durch dessen Schließstellung ein Steuerdruck in einem Innenraum eines zwischen dem Hauptventilteller und dem Mindestmengenventil angeordneten Steuerzylinders bestimmt wird, in welchem ein mit dem Mindestmengenventilkörper verbundener Steuerkolben verschiebbar gelagert ist, dessen Position im Steuerzylinder durch den Steuerdruck im Steuerzylinderinnenraum bestimmt wird.

Aufgrund der indirekten Kopplung des Hauptventiltellers mit dem Mindestmengenventilkörper über das Pilotventil und den Steuerzylinder, reicht bei entsprechender Ausnutzung der Druckverhältnisse innerhalb des Rückschlagventils bzw. der Bypassleitung eine relativ geringe, auf den Hauptventilteller ausgeübte Kraft aus, um das Mindestmengenventil entgegen einem hohen Druckunterschied zu schließen und den Hauptventilteller zu öffnen.

Auf Entlastungsbohrungen durch die Ventilspindel und unterstützende Federn, welche unter Umständen zu Schwingungen des Systems führen könnten, kann daher bei dem erfindungsgemäßen Rückschlagventil prinzipiell vollständig verzichtet werden. Sowohl das Öffnen des Hauptventiltellers und gleichzeitige Schließen des Mindestmengenventils, als auch das Öffnen des Mindestmengenventils und gleichzeitige Schließen des Hauptventiltellers, werden alleine durch den Druck des Mediums im Inneren des Ventilgehäuses bewirkt. Das erfindungsgemäße Rückschlagventil ist somit aufgrund seines konstruktiven Aufbaus inhärent sicher.

Die Unteransprüche enthalten vorteilhafte Ausgestaltungen und Weiterbildungen des erfindungsgemäßen Rückschlagventils.

Bei einem besonders vorteilhaften, erfinderischen Aufbau weist das Pilotventil einen an einer mit dem Hauptventilteller gekoppelten, axial verschiebbar im Ventilgehäuse gelagerten Ventilspindel angeordneten Pilotventilkörper auf, welcher im geschlossenen Zustand des Pilotventils an einem zum Steuerzylinderinnenraum weisenden Pilotventilsitz einer in Richtung zum Hauptventilteller weisenden, den Steuerzylinderinnenraum mit dem zuflußseitigen Ventilgehäuseinnenraum verbindenden Pilotventilöffnung anliegt. Der Steuerzylinderinnenraum weist hierbei mindestens einen Entleerungskanal auf und das Mindestmengenventil ist so mit dem Steuerkolben verbunden, daß bei einem geringen Druck im Steuerzylinderinnenraum das Mindestmengenventil geschlossen ist und bei einem hohen Druck im Steuerzylinderinnenraum das Mindestmengenventil geöffnet ist.

Bei einem geöffneten Pilotventil wird der Steuerzylinderinnenraum mit dem Medium gefüllt und es liegt im Steuerzylinderinnenraum nahezu der gleiche Druck an, wie im zuflußseitigen Ventilgehäuseinnenraum. Bei geschlossenem Pilotventil wird der Steuerzylinderinnenraum durch den Entleerungskanal, welcher vorzugsweise in die Bypassleitung hinter dem Mindestmengenventil mündet, geleert und der Druck sinkt ab. Auf diese Weise wird der Druck auf den Steuerkolben und somit dessen Position im Steuerzylinder verändert und das Mindestmengenventil geöffnet bzw. geschlossen.

Da der Ventilsitz des Pilotventils zum Steuerzylinderinnenraum weist, wird das Pilotventil allein durch den Druck des Mediums im zuflußseitigen Ventilgehäuseinnenraum geöffnet, sofern es nicht durch eine entsprechende Gegenkraft, welche durch den mit der Ventilspindel gekoppelten Hauptventilteller ausgeübt wird, d.h. durch den Druckabfall im Ventilgehäuse über dem Hauptventilteller, geschlossen gehalten wird.

Durch das Pilotventil müssen nur geringe Mengen des Mediums fließen. Daher kann der Querschnitt des Pilotventilkörpers im Verhältnis zum Querschnitt des Hauptventiltellers sehr gering gewählt werden, so daß z.B. die wirksame Querschnittfläche des Pilotventilkörpers nur ca. 1% der wirksamen Querschnittfläche des Hauptventiltellers entspricht. Es wird so ein hydraulisches Übersetzungsverhältnis von ca. 1:100 erreicht. In diesem Falle reicht daher schon ein Druckabfall über dem Hauptventilteller von 1% des Druckunterschieds zwischen dem Druck in der Speisewasserleitung und der nahezu drucklosen Bypassleitung zu einer Öffnung des Hauptventilltellers und einer Schließung des Pilotventils und damit auch des Mindestmengenventils aus. Liegt beispielsweise in der Speisewasserleitung ein Druck von ca. 100 bar vor, so ist bei einem Druckabfall ab ca. 1 bar über dem Hauptventilteller das Rückschlagventil geöffnet und das Pilotventil und damit das Mindestmengenventil sind geschlossen. Der Steuerzylinderinnenraum wird durch den Entleerungskanal geleert. Wird dann das Speisewasserregelventil geschlossen, so sinkt der Druckabfall in der Speisewasserleitung im allgemeinen auf Null ab. Damit sinkt selbstverständlich auch der Druckabfall im Ventilgehäuse über dem Hauptventilteller entsprechend ab, und das Pilotventil wird durch die Druckdifferenz zwischen der Speisewasserleitung und dem Steuerzylinderinnenraum sicher geöffnet und der Hauptventilteller geschlossen.

Vorteilhafterweise erstreckt sich die Ventilspindel durch eine zentrische Bohrung im Hauptventilteller von der Zufluß- zur Abflußseite durch den Hauptventilteller hindurch, wobei der Hauptventilteller verschiebbar auf der Ventilspindel gelagert ist. Die Ventilspindel weist hierbei an dem abflußseitig vom Hauptventilteller liegenden Abschnitt einen als Mitnehmer dienenden Anschlag auf, gegen welchen der Hauptventilteller bei einer Bewegung auf der Ventilspindel in Öffnungsrichtung anschlägt und die Ventilspindel mitzieht. Dieser Aufbau ist besonders einfach und kostengünstig.

Der Anschlag ist vorzugsweise entlang der Ventilspindel in einem vorgegebenen Abstand vom Hauptventilteller positionierbar und fixierbar. Durch die beliebige Positionierung des Anschlags auf der Ventilspindel läßt sich der Hub des Hauptventiltellers vorgeben, bei dem die Ventilspindel mitgezogen und das Pilotventil geschlossen wird.

Bei einer bevorzugten Ausführungsform ist zwischen dem Hauptventilteller und dem Anschlag an der Ventilspindel ein Pufferelement, z.b. eine Pufferfeder o.dgl., angeordnet. Dieses Pufferelement ist so gewählt, daß es erst bei geschlossenen Pilotventil nachgibt. Der Hauptventilteller kann so auch bei einem bereits vollständig geschlossenen Pilotventil unter Ausnutzung des Pufferweges, bzw. unter Zusammendrücken der Pufferfeder, noch weiter geöffnet werden, um größere Mengen durch das Rückschlagventil umsetzen zu können. Über die Position des Anschlags auf der Ventilspindel wird hierbei wiederum der Schaltpunkt für das Pilotventil bestimmt. Bei einer geeigneten Einstellung ist der Anschlag so positioniert, daß das Pilotventil bei ca. 60% des Gesamthubes des Hauptventiltellers geschlossen wird, und der Hauptventilteller auf den verbleibenden ca. 40% des Hubweges bei geschlossenem Pilotventil in das Pufferelement hineinfährt.

Weiterhin ist es besonders vorteilhaft, wenn der Pilotventilsitz eine sich zum Steuerzylinderinnenraum konisch aufweitende Form und der Pilotventilkörper einen Dichtabschnitt mit einer entsprechend konisch ausgebildeten Mantelfläche aufweist. Vorzugsweise weist der Pilotventilkörper zum Steuerzylinderinnenraum hin an den Dichtabschnitt angrenzend außerdem einen kreisförmigen Pilotventilteller (Prallteller) auf, welcher unter Belassung eines ringförmigen Spalts zwischen dem Außenrand des Pilotventiltellers und der Innenwandung des Steuerzylinders oder eines an die Pilotventilöffnung angrenzenden Abschnitts des Steuerzylinders im Steuerzylinder bzw. dem Abschnitt des Steuerzylinders angeordnet ist.

Bei einem vollständig geschlossenen Pilotventil ist dann die wirksame Querschnittfläche des Pilotventilkörpers, an welcher der hohe, im zuflußseitigen Ventilgehäuseinnenraum vorliegende Druck anliegt, kleiner als bei einem etwas geöffneten bzw. noch nicht ganz geschlossenen Pilotventil. Zum Schließen des Pilotventils ist daher eine größere Kraft erforderlich, als sie benötigt wird, um das einmal geschlossene Pilotventil entgegen dem Druck im zuflußseitigen Ventilgehäuseinnenraum offenzuhalten. Durch die so vorgegebene Kraft- bzw. Schalthysterese mit einem definierten Schließpunkt und einem definierten Öffnungspunkt für das Pilotventil werden Schwingungen infolge von Schwankungen im Druckabfall über dem Hauptventilteller im Bereich um den Öffnungsschaltpunkt des Pilotventils vermieden, d.h. die Stabilität des Ventilsystems wird erhöht. Außerdem führt eine solche Form des Pilotventilkörpers vorteilhafterweise zu einem schnellen, schlagartigen Öffnen des Pilotventils, wenn der Öffnungsschaltpunkt erst erreicht ist.

Vorzugsweise weist das Ventilgehäuse eine Montagewand in Form einer abnehmbaren Montageplatte auf, die eine koaxial zur Durchflußöffnung angeordnete Montageöffnung des Ventilgehäuses verschließt, und in welcher die Ventilspindel abflußseitig vom Hauptventilteller endseitig gelagert ist. Der Hauptventilteller und die Ventilspindel sind dabei mitsamt dem Pilotventil, dem Steuerzylinder, dem Steuerkolben und dem Mindestmengenventil bei abgenommener Montageplatte durch die Montageöffnung entnehmbar koaxial im Ventilgehäuse angeordnet. Eine derartige Konstruktion ist besonders kostengünstig und wartungsfreundlich, da eine Reparatur bzw. ein Austausch aller wesentlichen mechanischen Teile und der Dichtungen in der Regel ohne einen Ausbau des Rückschlagventils aus dem Leitungssystem erfolgen kann.

Die Erfindung wird im folgenden unter Hinweis auf die beigefügten Zeichnungen anhand von Ausführungsbeispielen näher erläutert. Es stellen dar:
- Fig. 1: einen Schnitt durch ein erfindungsgemäßes Rückschlagventil,

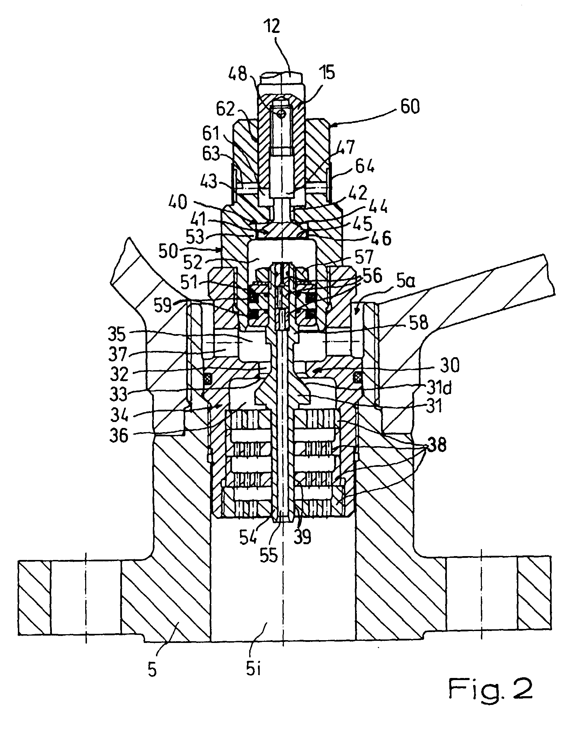

- Fig. 2: eine vergrößerte Darstellung des Bypassstutzens mit dem Pilotventil und dem Mindestmengenventil gemäß Fig. 1.

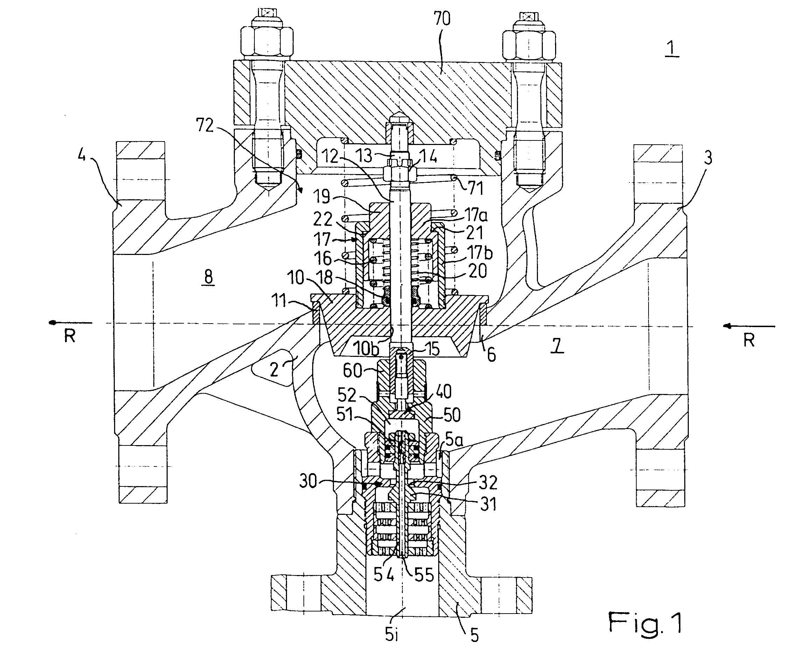

Wie das Ausführungsbeispiel in Fig. 1 zeigt, weist das erfindungsgemäße Rückschlagventil (1) ein Ventilgehäuse (2) mit einem in einer Hauptdurchflußrichtung (R) angeordneten Zuflußstutzen (3) und einem diesem gegenüberliegenden Abflußstutzen (4) auf. Der Gehäuseinnenraum ist durch eine im wesentlichen parallel zur Hauptdurchflußrichtung (R) angeordnete Mittelwand (6) des Ventilgehäuses (2) in einen zuflußseitigen und einen abflußseitigen Raum (7,8) unterteilt. In der Mittelwand (6) befindet sich quer zur Hauptdurchflußrichtung (R) eine Durchflußöffnung (9) mit einem abflußseitigen Dichtsitz (11). Im Ventilgehäuse (2) befindet sich weiterhin ein senkrecht zur Hauptdurchflußrichtung (R) beweglich angeordneter, im geschlossenen Zustand am Dichtsitz (11) anliegender Hauptventilteller (10), dessen Lage vom Druckabfall innerhalb des Ventilgehäuse (2) zwischen dem zufluß- und dem abflußseitigen Innenraum (7,8) bestimmt wird.

Zuflußseitig, koaxial zur Durchflußöffnung (9) weist das Ventilgehäuse (2) eine Bypassöffnung (5a) auf, welche in einen am Ventilgehäuse (2) angeordneten Bypassstutzen (5) zum Anschluß einer Bypassleitung mündet. In der Bypassöffnung (5a) befindet sich zur Regelung der Durchflußmenge in den Bypass ein Mindestmengenventil (30).

Dieses Mindestmengenventil (30) weist hierzu eine Regelbuchse (34) auf, welche in dem gezeigten Ausführungsbeispiel vorteilhafterweise von der Hauptventiltellerseite aus entnehmbar in den Bypassstutzen (5), gegenüber diesem abgedichtet, eingeschraubt ist. Selbstverständlich kann die Regelbuchse (34) z.B. auch in den Bypassstutzen (5) eingeschoben und/oder mittels einer bajonettverschlußartigen Verbindung im Bypassstutzen (5) befestigt sein.

In der Regelbuchse (34) des Mindestmengenventils (30) befindet sich ein Mindestmengenventilkörper (31), welcher im geschlossenen Zustand an einem zum Bypassstutzen (5) hin weisenden Ventilsitz (33) einer axialen, zentralen Mindestmengenventilöffnung (32) der Regelbuchse (34) anliegt.

Zwischen dem Hauptventilteller (10) und dem Mindestmengenventil (30) befindet sich ein in Richtung Mindestmengenventil (30) offener, koaxial zur Mindestmengenventilöffnung (32) angeordneter Steuerzylinder (50) mit einem darin verschiebbar gelagerten Steuerkolben (51), der über eine Mindestmengenventilspindel (54) mit dem Mindestmengenventilkörper (31) verbunden ist. Im vorliegenden Ausführungsbeispiel sind die Mindestmengenventilspindel (54) und der Mindestmengenventilkörper (31) einstückig hergestellt. Die Position des Steuerkolbens (51) im Steuerzylinder (50), und somit die Schließstellung des Mindestmengenventilkörpers (31), wird von dem Druck (Steuerdruck) im Steuerzylinderinnenraum (52) zwischen der geschlossenen Stirnwand des Steuerzylinders (50) und der Kopffläche des Steuerkolbens (51) bestimmt. Das Mindestmengenventil (30) ist so mit dem Steuerkolben (51) verbunden, daß bei einem geringen Druck im Steuerzylinderinnenraum (52) das Mindestmengenventil (30) geschlossen ist und bei einem hohen Druck im Steuerzylinderinnenraum (52) das Mindestmengenventil (30) geöffnet ist.

Der Steuerkolben (51) ist durch zwei O-Ring-Dichtungen (59) gegen die Innenwandungen des Steuerzylinders (50) abgedichtet. Durch die Mindestmengenventilspindel (54) verläuft eine axiale, den Steuerzylinderinnenraum (52) mit dem außenseitig hinter dem Mindestmengenventil (30) liegenden Innenraum (5i) des Bypassstutzens (5) verbindende Bohrung (55), welche als Entleerungskanal (55) für den Steuerzylinderinnenraum (52) dient. In der Stirnwand des Steuerzylinders (50) befindet sich ein Pilotventil (40) mit einem Pilotventilkörper (41), der im geschlossenen Zustand des Pilotventils (40) an einem zum Steuerzylinderinnenraum (52) weisenden Pilotventilsitz (43) einer in Richtung zum Hauptventilteller (10) weisenden, den Steuerzylinderinnenraum (52) mit dem zuflußseitigen Ventilgehäuseinnenraum (7) verbindenen Pilotventilöffnung (42) anliegt. Durch die Schließstellung des Pilotventils (40) wird somit der Steuerdruck im Steuerzylinderinnenraum (52) bestimmt.

Der Pilotventilkörper (41) ist an einer mit dem Hauptventilteller (10) gekoppelten, axial verschiebbar im Ventilgehäuse (2) gelagerten Ventilspindel (12) befestigt. Die Ventilspindel (12) erstreckt sich hierzu durch eine zentrische Bohrung (10b) im Hauptventilteller (10) von der Zufluß- zur Abflußseite durch den Hauptventilteller (10) hindurch. Der Hauptventilteller (10) ist dabei verschiebbar auf der Ventilspindel (12) gelagert.

Der Pilotventilkörper (41) bzw. die Ventilspindel (12) und der Hauptventilteller (10) sind somit koaxial zueinander im Ventilgehäuse (2) verschiebbar gelagert.

Die Ventilspindel (12) ist zuflußseitig vom Hauptventilteller (10) in einer am Steuerzylinder (50) angeordneten Lagerbuchse (60) und abflußseitig vom Hauptventilteller (10) endseitig in einer koaxial zur Durchflußöffnung (9) angeordneten Montagewand (70) gelagert.

Auf einem abflußseitig vom Hauptventilteller (10) liegenden Gewindeabschnitt (13) der Ventilspindel (12) ist eine gesicherte Kronenmutter (14) aufgeschraubt, welche als Anschlag (14) bzw. als Mitnehmer (14) dient. Bei einer Bewegung in Öffnungsrichtung fährt der Hauptventilteller (10) gegen diesen Anschlag (14) auf der Ventilspindel (12) und zieht die Ventilspindel (12) mit. Dadurch wird das Pilotventil (40) geschlossen.

Die Kronenmutter (14) ist in einem relativ großen Abstandsbereich beliebig vom Hauptventilteller (10) positionierbar und fixierbar.

Zwischen dem Hauptventilteller (10) und dem Anschlag (14) ist an der Ventilspindel (12) ein Pufferelement (16) angeordnet. Hierzu ist an dem Hauptventilteller (10) abflußseitig eine sich um die Ventilspindel (12) erstreckende, hohle Führungsbuchse (13) angeordnet, welche entlang der Ventilspindel (12) in mindestens zwei teleskopartig ineinander verschiebbare Teilstücke (17a,17b) unterteilt ist. Das montagewandseitige, innere Teilstück (17b) weist entlang der Ventilspindel (12) zwei ungefähr gleich lange, zylinderförmige Abschnitte mit unterschiedlichen Außen- und Innendurchmessern auf, die unter Bildung einer Anschlagstufe (21) miteinander verbunden sind. Der Abschnitt mit dem größeren Durchmesser weist zum Hauptventilteller (10) und wird innerhalb des anderen Teilstücks (17a) geführt, dessen Innendurchmesser genau an den Außendurchmesser des hauptventiltellerseitigen Abschnitts des inneren Teilstücks (17b) angepaßt ist. Der Abschnitt mit dem kleineren Durchmesser weist zur Montagewand (70) und weist einen an die Ventilspindel (12) angepassten Innendurchmesser auf. Er bildet somit quasi eine dicke Stirnwand (19) des montagewandseitigen, inneren Führungshülsenteilstücks (17b) mit einer zentralen Bohrung, durch welche die Führungshülse (17) auf der Ventilspindel (12) geführt wird. Das äußere Teilstück (17a) weist montagewandseitig eine ringförmige Stirnfläche (22) auf, deren Innendurchmesser an den Außendurchmesser des montagewandseitigen Abschnitts des inneren Teilstücks (13b) angepaßt ist. Die ringförmige Stirnfläche (22) dient als Anschlagring (22), an dem die Anschlagstufe (21) des inneren Teilstücks (17b) in einer maximalen Ausfahrstellung der Führungshülse (17) anliegt. Innerhalb der Führungsbuchse (17) ist eine Pufferfeder (16) angeordnet, welche sich zwischen dem Hauptventilteller (10) und der Innenseite der Anschlagstufe (22) bzw. der Stirnwand (19) des inneren Teilstücks (17b) der Führungsbuchse (17) erstreckt und die Teilstücke (17a,17b) in der Ruhestellung in ihrer maximalen Ausfahrstellung hält. Diese Pufferfeder (16) ist so gewählt bzw. derart vorgespannt, daß sie erst bei einem größeren Druck nachgibt und daher erst wirkt, wenn das Pilotventil (40) bereits geschlossen ist. Der Hauptventilteller (10) kann dadurch bei einem bereits vollständig geschlossenen Pilotventil (40) unter Zusammendrücken der Pufferfeder (16), weiter geöffnet werden, um so größere Mengen durch das Rückschlagventil (1) umsetzen zu können.

Durch die Position der Mutter (14) auf der Ventilspindel (12) wird der Schaltpunkt (bezüglich der Hubhöhe des Hauptventiltellers (10)) für das Pilotventil (40) bestimmt. bei dem gezeigten Ausführungsbeispiel ist die Mutter (14) so positioniert, daß das Pilotventil (40) bei ca. 60% des Gesamthubes des Hauptventiltellers (10) geschlossen wird, und der Hauptventilteller (10) auf den verbleibenden ca. 40% des Hubweges bei geschlossenem Pilotventil (40) in das Pufferelement (16) hineinfährt, d.h. die Pufferfeder (16) zusammendrückt.

Selbstverständlich kann ein derartiges Pufferelement (16) anstelle am Hautventilteller (10) auch am Anschlag (14) an der Ventilspindel (12) oder auch frei verschiebbar auf der Ventilspindel (12) angeordnet sein. Der hier dargestellte Aufbau hat jedoch den Vorteil, daß der Hauptventilteller (10) nicht nur innerhalb der zentrischen Bohrung (10b) durch den Hauptventilteller (10), sondern auch in der koaxial dazu angeordneten zentrischen Bohrung in der abflußseitigen Stirnwand (19) der Führungsbuchse (17) auf der Ventilspindel (12) gelagert ist und somit besser geführt wird.

Um die Ventilspindel (12) ist vorteilhafterweise innerhalb der Führungsbuchse (17) eine ringförmige, dicht an der Ventilspindel (12) anliegende Dichtung (18) angeordnet, welche durch eine zwischen der Dichtung (18) und der Innenseite der abflußseitigen Stirnwand (19) des montagewandseitigen Teilstücks (17b) der Führungsbuchse (13) innerhalb der Pufferfeder (16) angeordnete Feder (20) mit einem kleineren Durchmesser gegen die Hauptventiltellerwand um die zentrische Bohrung (10b) im Hauptventilteller (10) gedrückt wird. Dadurch wird bei geschlossenem Hautventilteller (10) der zuflußseitigen Innenraum (7) gegenüber dem abflußseitigen Innenraum (8) des Ventilgehäuses abdichtet. Die Dichtung (20) bildet somit ebenfalls eine Art Rückschlagventil. Durch diese Lagerung der Dichtung (20) wird auch bei einem Verklemmen der Dichtung (20) auf der Ventilspindel (12) die Bewegung der Ventilspindel (12) nicht behindert, so daß ein sicheres Öffnen des Pilotventils (40), und damit des Mindestmengenventils (30), gewährleistet ist. Selbstverständlich ist es auch möglich die Dichtung (18) mit der Feder (20) in einer einfachen, einteiligen Führungshülse (17) unterzubringen und das Pufferelement (16), wie bereits oben erwähnt, separat an der Ventilspindel bzw. der Anschlagmutter (14) aufzubauen oder ganz darauf zu verzichten. Der gezeigte Aufbau ist jedoch besonders kompakt und kostengünstig.

Zwischen der Montagewand (70) und dem Hauptventilteller (10) ist eine Rückstellfeder (71) angeordnet. Diese Rückstellfeder (71) dient lediglich dazu, ein Klappern des Ventiltellers (10) zu verhindern. Die Rückstellfeder (71) ist gerade so vorgespannt, daß bei einem mit der Montagewand (70) nach unten eingebauten Ventil (1) im drucklosen Zustand, d.h. bei entleerter Speisewasserleitung, der Hauptventilteller (10) geschlossen gehalten wird. Die Rückstellkraft dieser Rückstellfeder (71) entspricht daher ungefähr der Gewichtskraft des Hauptventiltellers (10).

Die Regelbuchse (34) weist eine zum zuflußseitigen Ventilgehäuseinnenraum (7) weisende, stirnseitig offene Zuflußkammer (35) und eine nach außen weisende, stirnseitig offene Abflußkammer (36) auf, welche durch eine die Mindestmengenventilöffnung (32) bildende, ringförmige Einschnürung voneinander getrennt sind. In das stirnseitig offene Ende der Zuflußkammer (35) der Regelbuchse (34) ist der stirnseitig zur Regelbuchse (34) hin offene Steuerzylinder (50) eingeschraubt, so daß der Steuerzylinderinnenraum (52) und die Zuflußkammer (35) einen gemeinsamen Raum bilden, der durch den Steuerkolben (51) unterteilt ist. Selbstverständlich kann der Steuerzylinder (50) auch von außen über die Regelbuchse (34) aufgeschraubt oder übergeschoben sein, so daß ein entsprechender gemeinsamer Raum gebildet wird. In einem geringen Abstand von der Mindestmengenventilöffnung (32) befinden sich in der Regelbuchse (34) mehrere radiale Bohrungen (37), welche als Zufluß zur Mindestmengenventilöffnung (32) die Zuflußkammer (35) der Regelbuchse (34) mit dem zuflußseitigen Ventilgehäuseinnenraum (7) verbinden.

Auf der Zuflußseite des Mindestmengenventilkörpers (31) ragt die Mindestmengenventilspindel (54) im montierten Zustand durch die Mindestmengenventilöffnung (32) und die Zuflußkammer (35) in den Steuerzylinder (50) hinein. Der Steuerkolben (51) weist eine zentrische Bohrung auf und ist auf das Ende der Mindestmengenventilspindel (54) bis gegen eine Anschlagkante (58) aufgeschoben und mit einer endseitig auf die Mindestmengenventilspindel (54) aufgeschraubten Mutter (57) festgeklemmt.

Auf der anderen Seite ragt die Mindestmengenventilspindel (54) über den Mindestmengenventilkörper (31) hinaus in die Abflußkammer (36) der Regelbuchse (34) hinein. In der Abflußkammer (36) befinden sich abflußseitig hinter dem Mindestmengenventilkörper (31) hintereinander mehrere, voneinander beabstandete, siebartig gelochte Drosselscheiben (38) mit unterschiedlichen Lochrastern und Lochdurchmessern, um den Druck stufenweise abzubauen. Diese Drosselscheiben (38) weisen jeweils eine zentrische Bohrung (39) zur Lagerung der Mindestmengenventilspindel (54) auf. Die abflußseitig letzte Drosselscheibe (38) ist von hinten in die Abflußkammer (36) eingeschraubt. An der Mindestmengenventilspindel (54) ist abflußseitig hinter dem Mindestmengenventilkörper (31) eine Anschlagkante angeordnet, welche im geöffneten Zustand des Mindestmengenventils (30) an der ersten Drosselscheibe (38) anliegt und so die maximale Öffnungsstellung begrenzt.

Der Mindestmengenventilsitz (33) weist eine sich zur Abflußkammer (36) konisch aufweitende Form auf. Der Mindestmengenventilkörper (31) besitzt einen Dichtabschnitt (31d) mit einer entsprechend konisch ausgebildeten Mantelfläche. Die wirksame Querschnittfläche des Mindestmengenventilkörpers (31) ist hierbei kleiner, als die dem Mindestmengenventilkörper (31) an der Mindestmengenventilspindel (54) gegenüberliegende, zur offenen Stirnseite des Steuerzylinders (50) hin weisende wirksame Querschnittfläche des Steuerkolbens (51). Bei einem geschlossenen Pilotventil (40), d.h. bei einem relativ drucklosen Steuerzylinderinnenraum (52) wird daher der Steuerkolben (51) durch den Druck im zuflußseitigen Ventilgehäuseinnenraum (7) in den Steuerzylinder (50) hineingedrückt und das Mindestmengenventil (30) geschlossen. Bei geöffnetem Pilotventil (40) liegt auf beiden Seiten des Steuerkolbens (51) nahezu der gleiche Druck an. Im Steuerzylinder (50) wirkt der Druck jedoch auf die ganze Kopffläche, während der Druck außerhalb, in der Zuflußkammer (35) der Regelbuchse (34) nur auf die um die Mindestmengenventilspindel (54) angeordnete Ringfläche des Steuerkolbens (51) wirkt. Der Steuerkolben (51) wird daher durch den Druck im Steuerzylinderinnenraum (52) aus dem Steuerzylinder (50) hinausgedrückt und das Mindestmengenventil (30) geöffnet.

In den durch die Mindestmengenventilspindel (54) verlaufenden Entleerungskanal (55) sind vorzugsweise am steuerzylinderseitigen Ende mehrere den Durchflußquerschnitt verengende Drosseldüsen (56) hintereinander eingeschoben. Diese Drosseldüsen (56) dienen dazu, den Druck stufenweise langsam abzubauen. Dadurch wird zum einen verhindert, daß sich der Druck bei geöffnetem Pilotventil (40) schon am Pilotventilsitz (43) abbaut. Zum anderen werden Kavitationsschäden am Pilotventil (40) und am Entleerungskanal (55) vermieden.

Der Steuerzylinder (50) und die Lagerbuchse (60) sind vorzugsweise einstückig hergestellt, wobei der Innenraum (61) der Lagerbuchse (60), in welchem in einem äußeren Endbereich (62) die Ventilspindel (12) gelagert ist, durch eine die Pilotventilöffnung (42) bildende, ringförmige Einschnürung von dem Steuerzylinderinnenraum (52) getrennt ist. In einem geringen Abstand von der Pilotventilöffnung (42) weist die Lagerbuchse (60) mehrere radiale Bohrungen (63) auf, welche als Zufluß zur Pilotventilöffnung (42) den Innenraum (61) der Lagerbuchse (60) mit dem zuflußseitigen Ventilgehäuseinnenraum (7) verbinden.

Über die Lagerbuchse (60) ist vorteilhafterweise ein als Schmutzfänger (64) dienender Siebzylinder (64) aufgeschoben, welcher die radialen Bohrungen (63) von außen abdeckt.

Der Pilotventilsitz (42) weist eine sich zum Steuerzylinderinnenraum (52) konisch aufweitende Form auf und der Pilotventilkörper (41) ist mit einem Dichtabschnitt (44) mit einer entsprechend konisch ausgebildeten Mantelfläche versehen. An den Dichtabschnitt (44) angrenzend weist der Pilotventilkörper (41) zum Steuerzylinderinnenraum (52) hin einen kreisförmigen Pilotventilteller (Prallteller) (45) auf, welcher in einem an die Pilotventilöffnung (42) angrenzenden Abschnitt (53) des Steuerzylinders (50) mit geringerem Innendurchmesser angeordnet ist. Zwischen dem Außenrand des Pilotventiltellers (45) und der Innenwandung im dem Abschnitt (53) des Steuerzylinders (50) befindet sich ein ringförmiger Spalt (46).

Bei einem vollständig geschlossenen Pilotventil (40) ist dann die wirksame Querschnittfläche des Pilotventilkörpers (41), an welcher der hohe, im zuflußseitigen Ventilgehäuseinnenraum (7) vorliegende Druck anliegt, durch den Querschnitt der Pilotventilöffnung (42) am Pilotventildichtsitz (43) gegeben. Dieser Querschnitt ist kleiner als der bei einem etwas geöffneten bzw. noch nicht ganz geschlossenen Pilotventil (40) wirkende Querschnitt des Pilotventiltellers (45). Zum Schließen des Pilotventils (40) ist daher eine größere Kraft erforderlich, als sie benötigt wird, um das einmal geschlossene Pilotventil (40) entgegen dem Druck im zuflußseitigen Ventilgehäuseinnenraum (7) offenzuhalten. Durch die so vorgegebene Kraft- bzw. Schalthysterese mit einem definierten Schließpunkt und einem definierten Öffnungspunkt des Pilotventils (40), werden Schwingungen infolge von Schwankungen im Druckabfall über dem Hauptventilteller (10) im Bereich um den Öffnungsschaltpunkt des Pilotventils (40) vermieden. Außerdem führt eine solche Form des Pilotventilkörpers (41) mit einem steil veränderlichen Durchflußwiderstand vorteilhafterweise zu einem schnellen, schlagartigen Öffnen des Pilotventils (40), wenn der Öffnungsschaltpunkt erst erreicht ist. Die gleiche Wirkung wird auch am Mindestmengenventil (30) durch die konische Form des Mindestmengenventilkörpers (31) erzielt.

Die wirksame Querschnittfläche des Pilotventilkörpers (41) entspricht bei einem bevorzugten Ausführungsbeispiel ca. 1% der wirksamen Querschnittfläche des Hauptventiltellers (10).

Bei dem gezeigten Ausführungsbeispiel ist die Montagewand (70) eine abnehmbare Montageplatte (70), welche eine koaxial zur Durchflußöffnung angeordnete Montageöffnung (72) des Ventilgehäuses (2) verschließt. Bei abgenommener Montageplatte (70) kann zunächst nach Entfernen der Kronenmutter (14) der Hauptventilteller (10) von der Ventilspindel (12) abgezogen werden. Anschließend kann die Regelbuchse (34) aus dem Bypassstutzen (5) ausgeschraubt werden und die Ventilspindel (12) kann mitsamt dem Pilotventil (40), dem Steuerzylinder (50), dem Steuerkolben (51) und dem Mindestmengenventil (30) durch die Montageöffnung (72) entnommen werden. Danach kann der Steuerzylinder (50) aus der Zuflußkammer (35) der Regelbuchse (34) ausgeschraubt werden.

Eine weitere Zerlegung des Mindestmengenventils (30) kann dann durch Abschrauben der Mutter (57) und Abziehen des Steuerkolbens (51) am einen Ende der Mindestmengenventilspindel (54) und Ausschrauben der abflußseitig letzten Drosselscheibe (38) aus der Abflußkammer (36) der Regelbuchse (34) am anderen Ende der Mindestmengenventilspindel (54) erfolgen.

Zur Zerlegung des Pilotventils (40) ist der Pilotventilkörper (41) an einem durch die Pilotventilöffnung (42) hindurchragenden Ventilspindelendstück (47) angeordnet, dessen größter Durchmesser kleiner ist als der lichte Durchmesser der Pilotventilöffnung (42). Dieses Ventilspindelendstück (47) ist in das in der Lagerbuchse (60) gelagerte Ende (15) der Ventilspindel (12) eingeschraubt und mit einem außerhalb der Lagerbuchse (60) quer durch die Ventilspindel (12) verlaufenden Sicherungsstift (48) o.dgl. gesichert. Durch Lösen des Sicherungsstifts (48) und Ausschrauben des Ventilspindelendstücks (47) aus der Ventilspindel (12) kann dann die Ventilspindel (12) bzw. der Pilotventilkörper (41) aus dem Lagerbuchsen-Steuerzylinder-Teil entnommen werden.

Der Zusammenbau erfolgt in umgekehrter Reihenfolge.

Da eine komplette Zerlegung und Reparatur des Ventils in der Regel ohne einen Ausbau des Rückschlagventils aus dem Leitungssystem erfolgen kann, ist das erfindungsgemäße Rückschlagventil äußerst kostengünstig und wartungsfreundlich.

## Patentansprüche

1. Rückschlagventil (1) mit einem Ventilgehäuse (2) mit einem in einer Hauptdurchflußrichtung (R) angeordneten Zuflußstutzen (3), einem diesem gegenüberliegenden Abflußstutzen (4) und einer im wesentlichen parallel zur Hauptdurchflußrichtung (R) angeordneten Mittelwand (6), welche den Gehäuseinnenraum in einen zuflußseitigen und einen abflußseitigen Raum (7, 8) unterteilt und in der sich quer zur Hauptdurchflußrichtung (R) eine Durchflußöffnung (9) mit einem abflußseitigen Dichtsitz (11) befindet,
mit einem im Ventilgehäuse (2) beweglich angeordneten, im geschlossenen Zustand am Dichtsitz (11) der Durchflußöffnung (9) anliegenden Hauptventilteller (10), mit einer zuflußseitig, koaxial zur Durchflußöffnung (9) im Ventilgehäuse (2) angeordneten Bypassöffnung (5a) und mit einem in der Bypassöffnung (5a) angeordneten Mindestmengenventil (30) mit mindestens einem Mindestmengenventilkörper (31), welcher mit dem Hauptventilteller (10) gekoppelt ist und welcher eine Mindestmengenventilöffnung (32) in Abhängigkeit von der Schließstellung des Hauptventiltellers (10) freigibt, dadurch gekennzeichnet, daß der Hauptventilteller (10) mit einem Pilotventil (40) gekoppelt ist, durch dessen Schließstellung ein Steuerdruck in einem Innenraum (52) eines zwischen dem Hauptventilteller (10) und dem Mindestmengenventil (30) angeordneten Steuerzylinders (50) bestimmt wird, in welchem ein mit dem Mindestmengenventilkörper (31) verbundener Steuerkolben (51) verschiebbar gelagert ist, dessen Position im Steuerzylinder (50) durch den Steuerdruck im Steuerzylinderinnenraum (52) bestimmt wird.

2. Rückschlagventil nach Anspruch 1, dadurch gekennzeichnet, daß das Pilotventil (40) einen an einer mit dem Hauptventilteller (10) gekoppelten, axial verschiebbar im Ventilgehäuse (2) gelagerten Ventilspindel (12) angeordneten Pilotventilkörper (41) aufweist, welcher im geschlossenen Zustand des Pilotventils (40) an einem zum Steuerzylinderinnenraum (52) weisenden Pilotventilsitz (43) einer in Richtung zum Hauptventilteller (10) weisenden, den Steuerzylinderinnenraum (52) mit dem zuflußseitigen Ventilgehäuseinnenraum (7) verbindenden Pilotventilöffnung (42) anliegt, und daß der Steuerzylinderinnenraum (52) mindestens einen Entleerungskanal (55) aufweist und das Mindestnengenventil (30) so mit dem Steuerkolben (51) verbunden ist, daß bei einem geringen Druck im Steuerzylinderinnenraum (52) das Mindestmengenventil (30) geschlossen ist und bei einem hohen Druck im Steuerzylinderinnenraum (52) das Mindestmengenventil (30) geöffnet ist.

3. Rückschlagventil nach Anspruch 2, dadurch gekennzeichnet, daß die Ventilspindel (12) sich durch eine zentrische Bohrung (10b) im Hauptventilteller (10) von der Zuflußzur Abflußseite durch den Hauptventilteller (10) hindurch erstreckt, und daß der Hauptventilteller (10) verschiebbar auf der Ventilspindel (12) gelagert ist.

4. Rückschlagventil nach Anspruch 3, dadurch gekennzeichnet, daß die Ventilspindel (12) an einem abflußseitig vom Hauptventilteller (10) liegenden Abschnitt (13) einen als Mitnehmer (14) dienenden Anschlag (14) aufweist, gegen welchen der Hauptventilteller (10) bei einer Bewegung auf der Ventilspindel (12) in Öffnungsrichtung anschlägt und die Ventilspindel (12) mitzieht.

5. Rückschlagventil nach Anspruch 4, dadurch gekennzeichnet, daß der Anschlag (14) entlang der Ventilspindel (12) in einem vorgegebenem Abstand vom Hauptventilteller (10) positionierbar und fixierbar ist.

6. Rückschlagventil nach Anspruch 4 oder 5, dadurch gekennzeichnet, daß der Anschlag (14) von einer Mutter (14) gebildet ist, welche auf einen Gewindeabschnitt (13) der Ventilspindel (12) aufgeschraubt und gesichert ist.

7. Rückschlagventil nach einem der Ansprüche 4 bis 6, dadurch gekennzeichnet, daß zwischen dem Hauptventilteller (10) und dem Anschlag (14) an der Ventilspindel (12) ein Pufferelement (16) angeordnet ist.

8. Rückschlagventil nach einem der Ansprüche 2 bis 7, dadurch gekennzeichnet, daß die Ventilspindel (12) zuflußseitig vom Hauptventilteller (10) in einer am Steuerzylinder (50) angeordneten Lagerbuchse (60), und abflußseitig vom Hauptventilteller (10) endseitig in einer koaxial zur Durchflußöffnung (9) angeordneten Montagewand (70) axial verschiebbar gelagert ist.

9. Rückschlagventil nach Anspruch 8, dadurch gekennzeichnet, daß der Steuerzylinder (50) einstückig mit der Lagerbuchse (60) gebildet ist, wobei der Innenraum (61) der Lagerbuchse (60), in welchem in einem äußeren Endbereich (62) die Ventilspindel (12) gelagert ist, durch eine die Pilotventilöffnung (42) bildende, ringförmige Einschnürung von dem Steuerzylinderinnenraum (52) getrennt ist, und daß in einem Abstand von der Pilotventilöffnung (42) die Lagerbuchse (60) mindestens eine radiale Bohrung (63) aufweist, welche als Zufluß zur Pilotventilöffnung (42) den Innenraum (61) der Lagerbuchse (60) mit dem zuflußseitigen Ventilgehäuseinnenraum (7) verbindet.

10. Rückschlagventil nach Anspruch 9, dadurch gekennzeichnet, daß über die Lagerbuchse (60) ein als Schmutzfänger (64) dienender, die radiale(n) Bohrung(en) (63) abdeckender Siebzylinder (64) aufgeschoben ist.

11. Rückschlagventil nach einem der vorstehenden Ansprüche, dadurch gekennzeichnet, daß der Pilotventilsitz (42) eine sich zum Steuerzylinderinnenraum (52) konisch aufweitende Form aufweist und der Pilotventilkörper (41) einen Dichtabschnitt (44) mit einer entsprechend konisch ausgebildeten Mantelfläche aufweist.

12. Rückschlagventil nach Anspruch 11, dadurch gekennzeichnet, daß der Pilotventilkörper (41) zum Steuerzylinderinnenraum (52) hin, an den Dichtabschnitt (44) angrenzend einen kreisförmigen Pilotventilteller (Prallteller) (45) aufweist, welcher unter Belassung eines ringförmigen Spalts (46) zwischen dem Außenrand des Pilotventiltellers (45) und der Innenwandung des Steuerzylinders (50) oder eines an die Pilotventilöffnung (42) angrenzenden Abschnitts (53) des Steuerzylinders (50) im Steuerzylinder (50) bzw. dem Abschnitt (53) des Steuerzylinders (50) angeordnet ist.

13. Rückschlagventil nach einem der vorstehenden Ansprüche, dadurch gekennzeichnet, daß die wirksame Querschnittfläche des Pilotventilkörpers (41) ca. 1% der wirksamen Querschnittfläche des Hauptventiltellers (10) entspricht.

14. Rückschlagventil nach einem der vorstehenden Ansprüche, dadurch gekennzeichnet, daß der Pilotventilkörper (41) an einem an dem in der Lagerbuchse (60) gelagerten Ende (15) der Ventilspindel (12) lösbar befestigten, durch die Pilotventilöffnung (42) hindurchragenden Ventilspindelendstück (47) angeordnet ist, dessen größter Durchmesser kleiner ist, als der lichte Durchmesser der Pilotventilöffnung (42).

15. Rückschlagventil nach einem der vorstehenden Ansprüche, dadurch gekennzeichnet, daß das Mindestmengenventil (30) eine in der Bypassöffnung (5a) angeordnete Regelbuchse (34) mit einer koaxial zum Steuerzylinder (50) angeordneten Mindestmengenventilöffnung (32) mit einem zur Ventilgehäuseaußenseite hin weisenden Ventilsitz (33) zum abdichtenden Schließen der Bypassöffnung (5a) durch den Mindestmengenventilkörper (31) aufweist.

16. Rückschlagventil nach Anspruch 15, dadurch gekennzeichnet, daß die Regelbuchse (34) des Mindestmengenventils (30) in einem an der Bypassöffnung (5a) des Ventilgehäuses (2) angeordneten Bypassstutzen (5) von der Hauptventiltellerseite aus entnehmbar, gegenüber dem Bypassstutzen (5) abgedichtet, eingeschoben oder eingeschraubt ist.

17. Rückschlagventil nach einem der Ansprüche 15 oder 16, dadurch gekennzeichnet, daß die Regelbuchse (34) eine zum zuflußseitigen Ventilgehäuseinnenraum (7) weisende, stirnseitig offene Zuflußkammer (35) und eine nach außen weisende, stirnseitig offene Abflußkammer (36) aufweist, welche durch eine die Mindestmengenventilöffnung (32) bildende, ringförmige Einschnürung voneinander getrennt sind.

18. Rückschlagventil nach Anspruch 17, dadurch gekennzeichnet, daß in das stirnseitig offene Ende der Zuflußkammer (35) der Regelbuchse (34) der stirnseitig zur Regelbuchse (34) hin offene Steuerzylinder (50) eingeschoben oder eingeschraubt ist.

19. Rückschlagventil nach einem der Ansprüche 17 oder 18, dadurch gekennzeichnet, daß die Regelbuchse (34) in einem Abstand von der Mindestmengenventilöffnung (32) mindestens eine radiale Bohrung (37) aufweist, welche als Zufluß zur Mindestmengenventilöffnung (32) die Zuflußkammer (35) der Regelbuchse (34) mit dem zuflußseitigen Ventilgehäuseinnenraum (7) verbindet.

20. Rückschlagventil nach einem der vorstehenden Ansprüche, dadurch gekennzeichnet, daß der Mindestmengenventilkörper (31) über eine Mindestmengenventilspindel (54) mit dem Steuerkolben (51) verbunden ist.

21. Rückschlagventil nach einem der vorstehenden Ansprüche, dadurch gekennzeichnet, daß die Mindestmengenventilspindel (54) über den Mindestmengenventilkörper (31) hinaus in die Abflußkammer (36) der Regelbuchse (34) hineinragt, und daß in der Abflußkammer (36) abflußseitig hinter dem Mindestmengenventilkörper (31) mindestens eine siebartig gelochte Drosselscheibe (38) angeordnet ist, welche zur Lagerung der Mindestmengenventilspindel (54) eine zentrische Bohrung (39) aufweist.

22. Rückschlagventil nach einem der vorstehenden Ansprüche, dadurch gekennzeichnet, daß der Steuerkolben (51) eine zentrische Bohrung aufweist und auf ein in den Steuerzylinder (50) hineinragendes Ende der Mindestmengenventilspindel (54) aufgeschoben und dort fixiert ist.

23. Rückschlagventil nach einem der vorstehenden Ansprüche, dadurch gekennzeichnet, daß der Steuerkolben (51) gegen die Innenwandungen des Steuerzylinders (50) abgedichtet ist.

24. Rückschlagventil nach einem der Ansprüche 20 bis 23, dadurch gekennzeichnet, daß die Mindestmengenventilspindel (54) mindestens eine axiale, den Steuerzylinderinnenraum (52) mit dem außenseitig hinter dem Mindestmengenventil (30) liegenden Innenraum (5i) des Bypassstutzens (5) verbindende, als Entleerungskanal (55) dienende Bohrung (55) aufweist.

25. Rückschlagventil nach einem der vorstehenden Ansprüche,, dadurch gekennzeichnet, daß in dem Entleerungskanal (55) mindestens eine den Durchflußquerschnitt verengende Drosseldüse (56) angeordnet ist.

26. Rückschlagventil nach Anspruch 25, dadurch gekennzeichnet, daß in dem Entleerungskanal (55) mehrere Drosseldüsen (56) hintereinander angeordnet sind.

27. Rückschlagventil nach einem der vorstehenden Ansprüche, dadurch gekennzeichnet, daß der Mindestmengenventilsitz (33) eine sich zur Abflußkammer (36) konisch aufweitende Form aufweist und der Mindestmengenventilkörper (31) einen Dichtabschnitt (31d) mit einer entsprechend konisch ausgebildeten Mantelfläche aufweist.

28. Rückschlagventil nach einem der vorstehenden Ansprüche, dadurch gekennzeichnet, daß die wirksame Querschnittfläche des Mindestmengenventilkörpers (31) kleiner ist, als die dem Mindestmengenventilkörper (31) an der Mindestmengenventilspindel (54) gegenüberliegende, zur offenen Stirnseite des Steuerzylinders (50) hin weisende wirksame Querschnittfläche des Steuerkolbens (51).

29. Rückschlagventil nach einem der vorstehenden Ansprüche, dadurch gekennzeichnet, daß zwischen der Montagewand (70) und dem Hauptventilteller (10) eine Rückstellfeder (71) angeordnet ist, deren Rückstellkraft ungefähr der Gewichtskraft des Hauptventiltellers (10) entspricht.

30. Rückschlagventil nach einem der vorstehenden Ansprüche, dadurch gekennzeichnet, daß am Hauptventilteller (10) abflußseitig eine sich um die Ventilspindel (12) erstreckende hohle Führungsbuchse (17) angeordnet ist, und der Hauptventilteller (10) innerhalb der zentrischen Bohrung (10b) durch den Hauptventilteller (10) und einer koaxial dazu angeordneten zentrischen Bohrung in einer abflußseitigen Stirnwand (19) der Führungsbuchse (13) auf der Ventilspindel (12) geführt gelagert ist.

31. Rückschlagventil nach Anspruch 30, dadurch gekennzeichnet, daß innerhalb der Führungsbuchse (17) eine ringförmige, dicht an der Ventilspindel (12) anliegende Dichtung (18) angeordnet ist, welche durch eine zwischen der Dichtung (18) und der Innenseite der abflußseitigen Stirnwand (19) der Führungsbuchse (17) angeordnete Feder (20) gegen die Hauptventiltellerwand um die zentrische Bohrung (10b) im Hauptventilteller (10) gedrückt wird.

32. Rückschlagventil nach einem der Ansprüche 30 oder 31, dadurch gekennzeichnet, daß die Führungsbuchse (17) entlang der Ventilspindel (12) in mindestens zwei teleskopartig ineinander geführt verschiebbare Teilstücke (17a,17b) unterteilt ist, welche in eine durch mindestens einen Anschlag oder Anschlagring (21,22) begrenzte, maximale Länge gegeneinander ausziehbar sind, und daß in der Führungsbuchse (17) mindestens eine Pufferfeder (16) angeordnet ist, welche die Teilstücke (17a,17b) in der Ruhestellung in ihrer maximalen Ausfahrstellung hält.

33. Rückschlagventil nach einem der vorstehenden Ansprüche, dadurch gekennzeichnet, daß die Montagewand (70) eine abnehmbare Montageplatte (70) ist, welche eine koaxial zur Durchflußöffnung angeordnete Montageöffnung (72) des Ventilgehäuses (2) verschließt, und daß der Hauptventilteller (10) und die Ventilspindel (12) mitsamt dem Pilotventil (40), dem Steuerzylinder (50), dem Steuerkolben (51) und dem Mindestmengenventil (30) bei abgenommener Montageplatte (70) durch die Montageöffnung (72) entnehmbar im Ventilgehäuse (2) angeordnet sind.
